# EUROPÄISCHE PATENTANMELDUNG

(11) **EP 2 101 284 A2**
(43) Veröffentlichungstag der Anmeldung: **16.09.2009**
(21) Anmeldenummer: 09154378.5
(22) Anmeldetag: 05.03.2009
(51) Int. Cl.: G06K 9/62, G06K 9/46

(54) **Verfahren und Einrichtung zum Analysieren digitaler Bilder**

(30) Priorität: 11.03.2008 DE 102008013608
(71) Anmelder: Vodafone Holding GmbH, 40027 Düsseldorf (DE)
(72) Erfinder: Reiß, Christoph, 61440, Oberursel (DE); Düsener, Mark, 80337, München (DE); Hertle, Jochen, 85521, Ottobrunn (DE); Gutschleg, Dirk, 81827, München (DE)
(74) Vertreter: Müller & Schubert

(57) **Zusammenfassung**

Die vorliegende Erfindung betrifft unter anderem ein Verfahren zum Bearbeiten einer Datenbank (14), in der Referenzbilder für ein Analyseverfahren zum automatischen Analysieren von digitalen Bildern abgespeichert sind, wobei während des automatischen Analyseverfahrens ein von einer Endeinrichtung (10) in einer Rechnereinheit (12) empfangenes digitales Bild (19) derart analysiert wird, dass eine Trefferliste (20) mit zu dem digitalen Bild (19) in Bezug stehenden Referenzbildern erzeugt wird. Das Verfahren ist dadurch gekennzeichnet, dass die in wenigstens einer Trefferliste (20) befindlichen Referenzbilder in einer Analyseeinrichtung (13) der Rechnereinheit (12) hinsichtlich wenigstens eines Parameters überprüft und gegen einen vorgegebenen Schwellenwert für den Parameter verglichen werden und dass bei Erreichen wenigstens eines vorgegebenen Schwellenwerts das entsprechende Referenzbild als Element klassifiziert und in der Datenbank (14) als klassifiziertes Element abgespeichert wird. Weiterhin betrifft die Erfindung ein Verfahren zum Analysieren eines digitalen Bildes sowie eine Einrichtung zum Analysieren eines digitalen Bildes.

## Beschreibung

Die vorliegende Erfindung betrifft zunächst ein Verfahren zum Bearbeiten einer Datenbank, in der Referenzbilder für ein Analyseverfahren zum automatischen Analysieren von digitalen Bildern abgespeichert sind. Weiterhin betrifft die Erfindung ein Verfahren zum Analysieren eines digitalen Bildes sowie eine Einrichtung zum Analysieren eines digitalen Bildes.

Auf dem Gebiet der automatischen Analyse digitaler Bilder ist mittlerweile eine große Bandbreite unterschiedlicher Verfahren und Möglichkeiten bekannt geworden. Mit der zunehmenden Verbreitung der digitalen Fotografie ergeben sich immer neue Möglichkeiten, digitale Bilder in Kommunikationsnetzen zu übertragen und aufgrund der analysierten Inhalte der Bilder immer neue Anwendungen zu erzeugen. Ein grundlegendes Merkmal hierbei ist, dass die Inhalte der digitalen Bilder analysiert werden können. Dies geschieht in der Regel mittels geeigneter Bildanalyseverfahren, die Bildanalysealgorithmen verwenden, die auf entsprechenden Rechnereinheiten implementiert sind und die die Inhalte der digitalen Bilder, vorzugsweise automatisch, analysieren.

Ein Anwendungsbeispiel für den Einsatz derartiger Bildanalyseverfahren ist etwa die bildbasierte Suche oder Anfrage. Eine solche Lösung ist beispielsweise in der DE 102 45 900 A1 beschrieben. Bei dieser bekannten Lösung wird mittels eines elektronischen Geräts mit Kamerafunktion ein Bild aufgenommen, das anschließend zu einer Rechnereinheit übertragen wird. Dort wird das Bild mittels eines Bilderkennungsverfahrens analysiert und in symbolische Informationen umgesetzt. Aufgrund dieser Symbole können dann geeignete Informationen bereitgestellt werden.

Eine andere Lösung hinsichtlich einer Analyse digitaler Bilder ist in der WO 2008/013679 A1 beschrieben. Dort ist ein Verfahren offenbart, bei dem ein Bild empfangen wird, bei dem dann Bildmerkmale aus dem Bild extrahiert werden und bei dem anschließend andere Bilder identifiziert werden, die ähnliche Bildmerkmale haben. Dann wird ein mit den anderen Bildern assoziierter Text ermittelt, in dem bestimmte Schlüsselworte identifiziert werden. Diese Schlüsselworte werden anschließend mit dem empfangenen Bild verknüpft. Eine andere Lösung zum Bearbeiten von Bildern, um in diesen enthaltenen Text zu erkennen, ist in der WO 2008/0030995 A2 beschrieben.

Es sind aber auch Lösungen bekannt, bei denen Bilder als Suchanfrage in das System eingegeben werden und bei denen dann eine Datenbank mit vielen Referenzbildern nach einem ähnlichen oder gleichen Bild durchsucht wird. Die Treffer werden als Liste mit den passenden Referenzbildern ausgegeben. Der Nutzer sendet ein Bild als Suchanfrage an eine Rechnereinheit. Das System zur bildbasierten Suche vergleicht nun das eingesendete Bild mit Referenzbildern in einer Datenbank. Die passenden Referenzbilder werden zu einer Trefferliste zusammengefasst. Eine auf diesem technologischen Gebiet bekannte Lösung ist beispielsweise in der US 5,123,057 B beschrieben. Die bekannte Lösung geht dabei von einer Situation aus, bei der eine Bildanalyse aufgrund hierarchisch angeordneter Referenzbilder, die inhaltlich bestimmt sind, und die in einer Referenzbilddatenbank abgespeichert sind, erfolgt. Dabei wird von der Existenz einer vorgefertigten Datenbank mit inhaltlich bestimmten Referenzbildern ausgegangen. Die bekannte Lösung gibt jedoch keinerlei Anhaltspunkt, wie eine solche inhaltliche Bestimmung von Referenzbildern erfolgt.

Der vorliegenden Erfindung liegt die Aufgabe zugrunde, entsprechende Verfahren und Einrichtungen bereitzustellen, mittels derer automatisch Sinnzusammenhänge zwischen Referenzbildern ermittelt werden können und mittels derer auch eine Klassifizierung für ein zu analysierendes digitales Bild geleistet werden kann, wobei insbesondere auch eine inhaltliche Bestimmung der Referenzbilder in der Datenbank vorgenommen werden kann. Weiterhin sollen verbesserte Verfahren und Einrichtungen zur automatischen Bildanalyse auf der Basis derartiger inhaltlich bestimmter Referenzbilder bereitgestellt werden.

Diese Aufgabe wird erfindungsgemäß gelöst durch das Verfahren zum Bearbeiten einer Datenbank mit den Merkmalen gemäß dem unabhängigen Patentanspruch 1, die Verfahren zum Analysieren eines digitalen Bildes mit den Merkmalen gemäß den unabhängigen Patentansprüchen 5 und 9 sowie die Einrichtungen zum Analysieren eines digitalen Bildes mit den Merkmalen gemäß den unabhängigen Patentansprüchen 14 und 15. Weitere Merkmale und Details der Erfindung ergeben sich aus den Unteransprüchen, der Beschreibung sowie den Zeichnungen. Dabei gelten Merkmale und Details, die hinsichtlich eines der Verfahrensaspekte beschrieben sind, selbstverständlich auch immer hinsichtlich der jeweils anderen Verfahrensaspekte, so dass hinsichtlich der entsprechenden Offenbarung stets wechselseitig Bezug genommen wird. Gleiches gilt für die unterschiedlichen Aspekte hinsichtlich der Einrichtung.

Ein grundlegendes Merkmal der vorliegenden Erfindung ist, dass bei Durchführung eines automatischen Bildanalyseverfahrens ein in einer Rechnereinheit empfangenes digitales Bild derart analysiert wird, dass eine Trefferliste mit zu dem digitalen Bild in Bezug stehenden Referenzbildern erzeugt wird. Dabei werden in der Regel mehrere Treffer geliefert, da das aufgenommene Motiv (Suchbild) ja in mehreren Referenzbildern vorkommen kann (beispielsweise kann ein Markenlogo in vielen anderen Bildern enthalten sein). Damit ergibt sich aus der Trefferliste ein Sinnzusammenhang zwischen den Bildern in der Liste. Bei sehr vielen Suchanfragen kann sich so über die Zeit eine sehr reichhaltige Beziehungsstruktur zwischen den Bildern aufbauen, da ein Motiv eben in vielen Trefferlisten vorkommen wird. Aus der Detailbeschreibung des einen Bildes lassen sich so Informationen über andere Bilder der Trefferliste automatisch generieren. Diese Grundidee wird im Folgenden in größerem Detail ausgeführt.

Die Analyse eines Bildes oder Bildbestandteils kann auf unterschiedlichen technischen Prinzipien beruhen, so dass die Erfindung diesbezüglich nicht auf bestimmte Ausführungsformen beschränkt ist. Nachfolgend wird hierzu eine bevorzugte, jedoch nicht ausschließliche Möglichkeit beschrieben.

Gemäß dieser Analysemethode, auf die im weiteren Verlauf immer wieder Bezug genommen wird, um den grundsätzlichen Ablauf des Verfahrens zu verdeutlichen, verfügt jedes Referenzbild über eine bestimmte Anzahl charakteristischer Merkmale, anhand derer es der Suchalgorithmus erkennt. Diese Merkmale werden "Feature Points" genannt. Ein Referenzbild wird als Treffer ausgegeben, wenn eine bestimmte Mindestanzahl von FeaturePoints mit dem Suchbild übereinstimmt. Wird ein Suchbild unter denselben Bedingungen aufgenommen wie ein Referenzbild, so wird die Anzahl der übereinstimmenden FeaturePoints ungefähr gleich der gesamten Anzahl der FeaturePoints des Referenzbildes sein. Wird das Suchbild jedoch so aufgenommen, dass das Motiv des Referenzbildes nur zum Teil auf dem Suchbild zu sehen ist, so wird die Anzahl der übereinstimmenden FeaturePoints in der Regel kleiner sein.

Mittels der vorliegenden Erfindung wird es insbesondere möglich, Referenzbilder dahingehend zu klassifizieren, ob es sich bei diesen um ein Elemente oder eine Szene handelt. Auch wird es gemäß der vorliegenden Erfindung möglich zu erkennen, ob ein gegebenes Bild ein Element darstellt oder eine Szene. Schließlich ist es mit der vorliegenden Erfindung auch möglich, anhand von Elementen digitale Bilder zu analysieren.

Wichtige Größen stellen gemäß der vorliegenden Erfindung somit Elemente und Szenen dar.

Ein Element stellt dabei ein Referenzbild dar, das hinsichtlich wenigstens eines Parameters, anhand dessen sich das Bild charakterisieren lässt, klassifiziert ist. Ein Element besitzt somit wenigstens ein Merkmal, anhand dessen es erkannt werden kann, beispielsweise wenn es als Bestandteil eines zu analysierenden digitalen Bildes einem automatischen Analyseverfahren unterworfen kann. Dabei ist es zunächst nicht erforderlich, dass das als Element klassifizierte Referenzbild auch inhaltlich bekannt ist. Wichtig ist lediglich, dass es wenigstens ein Merkmal aufweist, das in der Rechnereinheit während des Analysevorgangs erkannt wird. Ein Element steht daher vorteilhaft für ein Referenzbild, das in vielen anderen Referenzbildern als Motiv enthalten sein kann. Beispiele für Elemente sind Markenlogos, wiederkehrende Details an Gebäuden, Gegenstände des allgemeinen Gebrauchs, Verkehrsschilder, und dergleichen. Ein Element kann daher auch aus einer Kombination von Elementen bestehen.

Eine Szene steht gemäß der vorliegenden Erfindung für ein Bild, in dem mindestens ein Element enthalten ist. Die Szene kann aber auch zwei oder mehr Elemente enthalten, ebenso wie Bestandteile, bei denen es sich nicht um Elemente handelt. Eine Szene kann zum Beispiel ein Panoramabild einer Kirche mit Markenlogos einiger Läden, Lokale und dergleichen im Vordergrund sein.

Gemäß einem ersten Aspekt der Erfindung wird ein Verfahren zum Bearbeiten einer Datenbank, in der Referenzbilder für ein Analyseverfahren zum automatischen Analysieren von digitalen Bildern abgespeichert sind, bereitgestellt, wobei während des automatischen Analyseverfahrens ein in einer Rechnereinheit empfangenes digitales Bild derart analysiert wird, dass eine Trefferliste mit zu dem digitalen Bild in Bezug stehenden Referenzbildern erzeugt wird. Das Verfahren ist dadurch gekennzeichnet, dass die in wenigstens einer Trefferliste befindlichen Referenzbilder in einer Analyseeinrichtung der Rechnereinheit hinsichtlich wenigstens eines Parameters überprüft und gegen einen vorgegebenen Schwellenwert für den Parameter verglichen werden und dass bei Erreichen wenigstens eines vorgegebenen Schwellenwerts das entsprechende Referenzbild als Element klassifiziert und in der Datenbank als klassifiziertes Element abgespeichert wird.

Mittels dieses Verfahrens wird es möglich, ein Referenzbild innerhalb der Datenbank inhaltlich zu klassifizieren. Insbesondere lässt sich automatisch ermitteln, ob es sich bei einem Referenzbild in der Referenzbilddatenbank mit hoher Wahrscheinlichkeit um ein Element oder eine Szene handelt.

Der Zweck dieses Verfahrens ist es, automatisch die in der Referenzdatenbank enthaltenen Referenzbilder als Elemente aufzufinden.

Wird ein beliebiges Suchbild in die Rechnereinheit gegeben, so ergibt sich, wie in weiter oben beschrieben, als Resultat eine Liste von Matchings, die so genannte Trefferliste. Wenn man nun eine Statistik darüber führt, wie häufig ein Referenzbild als Ergebnis erscheint und/oder an welcher Stelle in der Trefferliste und/oder mit welcher Übereinstimmung zum zu analysierenden Bild, so kann man auch hierdurch Elemente als solche erkennen.

Dazu werden die in wenigstens einer Trefferliste befindlichen Referenzbilder in einer Analyseeinrichtung der Rechnereinheit hinsichtlich wenigstens eines Parameters überprüft und gegen einen vorgegebenen Schwellenwert für den Parameter verglichen. Bei Erreichen wenigstens eines vorgegebenen Schwellenwerts wird das entsprechende Referenzbild - vorzugsweise automatisch - als Element klassifiziert und in der Datenbank als klassifiziertes Element abgespeichert.

Je nach Art des Vergleichswerts kann die Klassifizierung beispielsweise erfolgen, wenn ein entsprechender Schwellenwert überschritten oder unterschritten wird.

Dabei ist die Erfindung nicht auf bestimmte Typen von Parametern beschränkt, so dass ein Referenzbild auf unterschiedliche Weise als Element klassifiziert werden kann. Nachfolgend werden hierzu einige vorteilhafte, jedoch nicht ausschließliche Beispiele beschrieben.

Es versteht sich von selbst, dass diese Beispiele jeweils einzeln für sich, aber auch in jeder möglichen Kombination verwendet werden können, um ein Referenzbild als Element zu klassifizieren.

Vorteilhaft können in der Analyseeinrichtung der Rechnereinheit alle in einer Trefferliste befindlichen Referenzbilder hinsichtlich ihres Rankings innerhalb der Trefferliste überprüft und gegen einen vorgegebenen Schwellenwert verglichen werden. Tritt ein Referenzbild meist nicht unter den ersten Treffern in einer Trefferliste auf, so deutet dies auf ein Element hin, da die zu analysierenden digitalen Bilder, die der Auslöser für eine Trefferliste sind, in der Regel eine Szene darstellen. Je tiefer ein Referenzbild in einer Trefferliste positioniert ist, beispielsweise in der unteren Hälfte, im unteren Drittel oder dergleichen, desto eher handelt es sich dabei um ein Element. Die Analyseeinrichtung prüft in diesem Schritt folglich, an welcher Stelle sich ein Referenzbild innerhalb der Trefferliste, bezogen auf die Gesamtlänge der Trefferliste, befindet.

Vorzugsweise können in der Analyseeinrichtung der Rechnereinheit alle in einer Trefferliste befindlichen Referenzbilder hinsichtlich des Grades ihrer Übereinstimmung mit dem zu analysierenden digitalen Bild überprüft und gegen einen vorgegebenen Schwellenwert verglichen werden. Dies soll beispielhaft anhand der oben beschriebenen FeaturePoints verdeutlicht werden. Wird ein Großteil der FeaturePoints eines innerhalb der Trefferliste befindlichen Referenzbildes in dem zu analysierenden digitalen Bild (dem Suchbild) gefunden, so ist die Wahrscheinlichkeit hoch, dass es sich um ein Element handelt. Eine Szene als Referenzbild wird in der Regel nur teilweise Übereinstimmungen hervorrufen, da die Szenen meistens größere Unterschiede zueinander aufweisen. Durch diesen Schritt wird somit der mittlere Grad der Übereinstimmung der FeaturePoints ermittelt. Beispielsweise könnte der vorgegebene Schwellenwert bei 50%, vorzugsweise bei 70%, ganz besonders bevorzugt bei 80% liegen. Wenn der ermittelte Grad der Übereinstimmung oberhalb von diesem Schwellenwert liegt, kann es sich dann um ein Element handeln.

In weiterer Ausgestaltung kann vorteilhaft vorgesehen sein, dass in der Analyseeinrichtung der Rechnereinheit alle in einer Trefferliste befindlichen Referenzbilder hinsichtlich des Grades ihrer größenordnungsmäßigen Repräsentanz innerhalb des zu analysierenden digitalen Bildes, bezogen auf die Gesamtfläche des zu analysierenden digitalen Bildes, überprüft und gegen einen vorgegebenen Schwellenwert verglichen werden. Werden die FaturePoints eines Referenzbildes beispielsweise innerhalb eines kleinen räumlichen Bereiches des zu analysierenden digitalen Bildes (des Suchbilds) wiedergefunden, so ist die Wahrscheinlichkeit hoch, dass diese FeaturePoints, und damit das dazugehörige Referenzbild, ein Element beschreiben. Beispielsweise könnte ein diesbezüglich geeigneter Schwellenwert bei 30%, vorzugsweise bei 20%, besonders bevorzugt bei 10% liegend. Wenn sich die im zu analysierenden digitalen Bild erkannten FeaturePoints in einem Bereich des Bildes befinden, der unterhalb dem vorgegebenen Schwellenwert liegt, wobei die räumliche und prozentuale Repräsentanz der FeaturePoints auf die Gesamtfläche des zu analysierenden digitalen Bildes bezogen ist, so wird das Referenzbild der Trefferliste, zu dem diese FeaturePoints gehören, als Element klassifiziert.

Vorteilhaft können in der Analyseeinrichtung der Rechnereinheit die in einer Vielzahl von unterschiedlichen Trefferlisten befindlichen Referenzbilder, die im Zusammenhang mit einer Vielzahl von unterschiedlichen zu analysierenden digitalen Bildern erzeugt worden sind, hinsichtlich ihrer absolut auftretenden Häufigkeit innerhalb dieser Trefferlisten überprüft und gegen einen vorgegebenen Schwellenwert verglichen werden. Je häufiger ein Referenzbild in unterschiedlichen Trefferlisten, die ja bezüglich ganz unterschiedlicher Suchbilder erzeugt werden, auftritt, desto größer ist die Wahrscheinlichkeit, dass es sich bei diesem Referenzbild um ein Element handelt.

Insbesondere kann zum Erkennen, ob es sich bei einem Referenzbild innerhalb einer Trefferliste um ein Element handelt, auch eine beliebige Kombination der vorgenannten Vergleichsschritte genutzt werden.

Vorzugsweise kann bei Erreichen wenigstens eines vorgegebenen Schwellenwerts das entsprechende Referenzbild in einer Weise als Elemente klassifiziert wird, dass das entsprechende Referenzbild an eine Editoreinrichtung übertragen wird, innerhalb derer die Klassifizierung des Referenzbildes als Element erfolgt. In weiterer Ausgestaltung kann ein in der Rechnereinheit als Element klassifiziertes Referenzbild einer Editoreinrichtung zugeführt werden, in der das Element mit wenigstens einer weiteren, das Element charakterisierenden Zusatzinformation, verknüpft wird. Mittels des Editors können dann weitergehende Informationen zu dem Referenzbild erzeugt und mit diesem verknüpft werden, wodurch für das als Elemente klassifizierte Referenzbild auch eine inhaltliche Bestimmung durchgeführt werden kann.

Durch Kombination der beschriebenen Verfahrensschritte und insbesondere durch Prüfung neuer Referenzbilder auf die Elementeigenschaft hin, wird die Referenzbilddatenbank automatisch immer mehr klassifizierte Elemente beinhalten. Dies kann weiter dazu benützt werden, auch komplexere Bilder zu klassifizieren.

Das vorstehend beschriebene Verfahren stellt eine Möglichkeit dar, wie automatisch erkannt werden kann, ob es sich bei einem Referenzbild innerhalb der Referenzbilddatenbank um ein Element handelt, das dann entsprechend klassifiziert wird. Die bei der Analyse eines zu analysierenden digitalen Bildes erzeugte Trefferliste wird in besonderer Weise ausgewertet. Weiterhin wird vorteilhaft eine Art Statistik über viele solcher Analysevorgänge geführt. Dabei geht es in erster Linie um eine Prüfung, wie häufig und an welcher Stelle ein Referenzbild innerhalb einer Trefferliste auftaucht, und welchen Grad an Übereinstimmung oder Repräsentanz es mit dem zu analysierenden digitalen Bild hat. Dabei ist es zunächst nicht wichtig, welchen Inhalt das entsprechende Referenzbild tatsächlich hat. Dies kann in einem optionalen Schritt mittels der Editoreinrichtung bewerkstelligt werden. Vielmehr ist es bei diesem Verfahren grundsätzlich ausreichend, wenn zunächst nur der Status des Referenzbildes ermittelt wird, auf dessen Basis dann eine Klassifizierung als Element vorgenommen wird.

War es bei der zum Stand der Technik beschriebenen Lösung so, dass eine Analyse eines digitalen Bildes auf der Basis einer Datenbank mit hierarchisch angeordneten Elementen erfolgt, wobei die Elemente als in der Datenbank bereits vorgegebenen angenommen werden, so wird mittels des vorstehend beschriebenen erfindungsgemäßen Verfahrens eine Lösung offenbart, wie entsprechende Referenzbilder in einer Datenbank als Elemente klassifiziert werden können, ohne dass dies einer manuellen Bearbeitung bedarf, was aufwändig ist. Alternativ oder zusätzlich ist es mit der erfindungsgemäßen Lösung nunmehr auch möglich, hierarchische Beziehungen zwischen Elementen und Szenen aufzubauen. Dies soll anhand eines Beispiels verdeutlicht werden. Beispielsweise könnte ein Rad als Teil eines Autos erkannt sein, und ein Auto wiederum als Teil einer Straßenszene. Dabei handelt es sich bei dem Rad und dem Auto vorteilhaft um Elemente, die in hierarchischer Beziehung zueinander stehen. Dieser Zusammenhang lässt sich mit dem erfindungsgemäßen Verfahren automatisch auffinden. Bei dem erfindungsgemäßen Verfahren werden die erforderlichen Schritte automatisch durchgeführt, indem die Trefferliste hinsichtlich der Anzahl und Qualität der darin enthaltenen Referenzbilder überprüft wird. Vorteilhaft wird dabei nicht nur eine Trefferliste geprüft. Vielmehr wird vorzugsweise eine große Anzahl von Trefferlisten zu den unterschiedlichsten Analysevorgängen untersucht.

Gemäß einem weiteren Aspekt der Erfindung wird eine Einrichtung zum Analysieren eines digitalen Bildes bereitgestellt, mit einer Rechnereinheit, aufweisend eine Kommunikationsschnittstelle zu wenigstens einer elektronischen Endeinrichtung, einer der Rechnereinheit zugeordneten Datenbank, in der Referenzbilder abgespeichert sind, einer der Rechnereinheit zugeordneten Analyseeinrichtung zum Analysieren digitaler Bilder, aufweisend eine Einrichtung zum Erstellen einer Trefferliste mit Referenzbildern, die in Bezug zu dem zu analysierenden digitalen Bild stehen, eine Einrichtung zum Vergleichen der in wenigstens einer Trefferliste befindlichen Referenzbilder hinsichtlich wenigstens eines Parameters gegen wenigstens einen vorgegebenen Schwellenwert und eine Einrichtung zum Klassifizieren des Referenzbildes bei Erreichen wenigstens eines Schwellenwerts als klassifiziertes Element.

Diese Einrichtung ist vorteilhaft zur Durchführung des wie vorstehend beschriebenen erfindungsgemäßen Verfahrens ausgebildet, wobei die Einrichtung hierzu über entsprechend geeignete Mittel verfügt. Zur Ausgestaltung und Funktionsweise der erfindungsgemäßen Einrichtung wird deshalb auf die Ausführungen zum erfindungsgemäßen Verfahren verwiesen und zu diesen vollinhaltlich Bezug genommen.

Gemäß einem weiteren Verfahrensaspekt der Erfindung wird ein Verfahren zum Analysieren eines digitalen Bildes bereitgestellt, wobei das zu analysierende digitale Bild in einer einer Rechnereinheit zugeordneten Analyseeinrichtung automatisch analysiert wird, wobei das digitale Bild gegen Referenzbilder, die in einer der Rechnereinheit zugeordneten Datenbank abgespeichert sind, verglichen wird und wobei solche Referenzbilder, die in einem Bezug zu dem zu analysierenden digitalen Bild stehen, von der Analyseeinrichtung in einer Trefferliste zusammengefasst werden. Das Verfahren ist dadurch gekennzeichnet, dass mittels des Verfahrens analysiert wird, ob es sich bei dem zu analysierenden digitalen Bild um ein Element oder eine Szene handelt, derart, dass alle in der Trefferliste zusammengefassten Referenzbilder in der Analyseeinrichtung dahingehend geprüft werden, ob es sich um klassifizierte Elemente handelt, dass in der Trefferliste befindliche klassifizierte Elemente automatisch gekennzeichnet werden, dass in der Trefferliste gekennzeichnete klassifizierte Elemente mittels der Analyseeinrichtung aus dem zu analysierenden digitalen Bild subtrahiert werden, dass das verbleibende digitale Restbild einem weiteren Vergleichsschritt unterzogen wird und dass eine bei dem weiteren Vergleichschritt erzeugte zweite Trefferliste in der Analyseeinrichtung bezüglich ihrer Inhalte analysiert wird.

Durch dieses Verfahren wird eine Möglichkeit beschrieben, wie man erkennt, ob ein gegebenes Bild ein Element darstellt oder eine komplexe Szene. Das gegebene Bild wird zunächst gegen alle vorhandenen Referenzbilder mittels Bildvergleich geprüft. Dabei wird vorteilhaft davon ausgegangen, dass ein Teil dieser Referenzbilder bereits als Elemente klassifiziert wurden, was vorzugsweise unter Zuhilfenahme eines wie weiter oben beschriebenen erfindungsgemäßen Verfahrens gemäß dem ersten Verfahrensaspekt erfolgen kann.

### Findet ein Matching statt, so wird vorzugsweise folgendes Analyseverfahren durchlaufen:

Zunächst wird die Trefferliste (die Ergebnisliste) nach Bildern durchsucht, welche bereits als Element klassifiziert worden sind. Gibt es in der Ergebnisliste bereits Elemente, so wird dies zur weiteren Auswertung vermerkt, indem die entsprechenden Elemente gekennzeichnet werden. Anschließend werden die Elemente aus dem zu analysierenden digitalen Bild subtrahiert. Beispielsweise kann dies geschehen, indem diejenigen FeaturePoints des zu untersuchenden Bildes, welche mit den gefundenen Elementen übereinstimmen, vom zu analysierenden Bild subtrahiert werden. Die verbleibenden FeaturePoints beziehungsweise das entsprechende Restbild werden noch einmal zum Matching in die Analyseeinrichtung geschickt.

Findet beispielsweise kein Matching statt, so kann vorgesehen sein, dass das Bild nicht automatisch klassifiziert wird. Eventuell kann dieses dann einer Editoreinrichtung zur Sichtprüfung und gegebenenfalls manuellen Klassifizierung zugeführt werden. Findet kein Matching statt, kann dies beispielsweise auch bedeuten, dass die bereits subtrahierten Elemente das Bild hinreichend klassifizieren. Dies soll anhand eines Beispiels verdeutlicht werden. Befinden sich in einer Trefferliste beispielsweise die Elemente "Tür" und "Fenster", sonst aber nichts, so wird man als Ergebnis "Haus" erhalten.

Vorteilhaft kann vorgesehen sein, dass mittels des Verfahrens das zu analysierende digitale Bild auf der Basis der Inhalte von wenigstens einer Trefferliste, vorzugsweise der erzeugten zweiten Trefferliste, in der Analyseeinrichtung als Element oder Szene klassifiziert wird.

In weiterer Ausgestaltung kann in dem Fall, dass die bei dem weiteren Vergleichsschritt erzeugte zweite Trefferliste - etwa trotz weiterhin vorhandener Suchmerkmale, wie beispielsweise weiterer FeaturePoints - keine Inhalte aufweist, das zu analysierende digitale Bild in der Rechnereinrichtung als Element klassifiziert und als klassifiziertes Element in der Datenbank abgespeichert werden.

Vorteilhaft kann in dem Fall, dass die bei dem weiteren Vergleichsschritt erzeugte zweite Trefferliste wenigstens einen Treffer aufweist, das verbleibende Restbild einer Editoreinrichtung zugeführt werden, um in dem Restbild wenigstens ein weiteres Element zu klassifizieren.

Die im weiteren Vergleichschritt erzeugte zweite Trefferliste kann somit wie folgt zur Klassifizierung herangezogen werden: Ist die zweite Trefferliste lang, so muss davon ausgegangen werden, dass die verbleibenden Treffer (beispielsweise deren FeaturePoints) zumindest teilweise wenigstens ein Element beschreiben. In diesem Fall kann das entsprechende Referenzbild optional an eine Editoreinrichtung gegeben werden, die diese Referenzbilder klassifiziert und die entsprechenden Bildausschnitte als neue Elemente in die Referenzdatenbank einstellt. Ist die zweite Trefferliste kurz oder leer, so wird der Rest des Bildes vorteilhaft nicht weiter klassifiziert. Matchen keine Ergebnisse untereinander, so ist sicherlich eine Szene als Suchbild angegeben worden.

Das Verfahren gemäß diesem Aspekt offenbart somit eine Möglichkeit zu analysieren, ob es sich bei einem zu analysierenden digitalen Bild, welches zu Analysezwecken an eine Rechnereinheit übertragen wurde, um eine komplexe Szene, oder aber um ein Detail (Element) handelt.

Das zu analysierende Bild wird zur Rechnereinheit übertragen und dort geprüft, wobei eine Trefferliste mit Referenzbildern erzeugt wird. Diese Trefferliste enthält unterschiedliche Typen von Referenzbildern, unter anderem auch bereits als Elemente klassifizierte Referenzbilder. Die resultierende Trefferliste enthält unterschiedliche Referenzbildtypen, beispielsweise Szenen, ein oder mehrere Elemente und dergleichen. Um nun das zu analysierende Bild zu prüfen, werden solche Referenzbilder, die in der Trefferliste bereits als klassifizierte Elemente erkannt wurden, aus dem zu analysierenden Bild subtrahiert. Wenn in dem zu analysierenden Bild nichts übrig bleibt, das heißt keine weiteren Treffer vorhanden sind, deutet dies darauf hin, dass es sich dabei um ein Element handelt. Wenn ein Teil des Bildes übrig bleibt, kann dies darauf hindeuten, dass wenigstens ein neues Element enthalten ist.

Durch Kombination der beiden zuvor beschriebenen Verfahrensaspekte und insbesondere durch Prüfung neuer Referenzbilder auf die Elementeigenschaft hin, wird die Referenzbilddatenbank automatisch immer mehr klassifizierte Elemente beinhalten. Dies kann weiter dazu benützt werden, auch komplexere Bilder zu klassifizieren.

Gemäß einem weiteren Aspekt wird eine Einrichtung zum Analysieren eines digitalen Bildes bereitgestellt, mit einer Rechnereinheit, aufweisend eine Kommunikationsschnittstelle zu wenigstens einer elektronischen Endeinrichtung, einer der Rechnereinheit zugeordneten Datenbank, in der Referenzbilder abgespeichert sind, einer der Rechnereinheit zugeordneten Analyseeinrichtung zum Analysieren digitaler Bilder, aufweisend eine Einrichtung zum Erstellen einer Trefferliste mit Referenzbildern, die in Bezug zu dem zu analysierenden digitalen Bild stehen, eine Einrichtung mit Mitteln zum Überprüfen der Referenzbilder innerhalb der Trefferliste, ob es sich um klassifizierte Elemente handelt und Mitteln zum Kennzeichnen der in der Trefferliste identifizierten Elemente, eine Subtraktionseinrichtung zum Subtrahieren von in der Trefferliste gekennzeichneten Elementen aus dem zu analysierenden digitalen Bild und eine Einrichtung zum Erstellen einer zweiten Trefferliste mit Referenzbildern auf der Basis des nach der Subtraktion verbliebenen digitalen Restbildes und zum Analysieren der zweiten Trefferliste hinsichtlich ihrer Inhalte.

Diese Einrichtung ist vorteilhaft zur Durchführung des wie vorstehend beschriebenen erfindungsgemäßen Verfahrens ausgebildet, wobei die Einrichtung hierzu über entsprechend geeignete Mittel verfügt. Zur Ausgestaltung und Funktionsweise der erfindungsgemäßen Einrichtung wird deshalb auf die Ausführungen zum erfindungsgemäßen Verfahren verwiesen und zu diesen vollinhaltlich Bezug genommen.

Gemäß noch einem weiteren Verfahrensaspekt wird ein Verfahren zum Analysieren eines digitalen Bildes bereitgestellt, wobei das zu analysierende digitale Bild von einer elektronischen Endeinrichtung auf eine Rechnereinheit übertragen und in einer der Rechnereinheit zugeordneten Analyseeinrichtung automatisch analysiert wird, indem das digitale Bild gegen Referenzbilder, die in einer der Rechnereinheit zugeordneten Datenbank abgespeichert sind, verglichen wird, wobei solche Referenzbilder, die in einem Bezug zu dem zu analysierenden digitalen Bild stehen, von der Analyseeinrichtung in einer Trefferliste zusammengefasst werden, und wobei zum analysierten digitalen Bild erzeugte Kontextinformationen von der Rechnereinheit zur elektronischen Endeinrichtung übertragen werden. Das Verfahren ist dadurch gekennzeichnet, dass die Trefferliste in der Analyseeinrichtung automatisch auf klassifizierte Elemente hin überprüft wird, dass aus den ermittelten klassifizierten Elementen automatisch ein Gesamtkontext zu dem zu analysierenden Bild erstellt wird und dass der Gesamtkontext an die elektronische Endeinrichtung übertragen wird.

Ein Problem bei allen Systemen für bildbasierte Suche ist das Generieren von Zusatzinformationen und deren Zuordnung zu dem passenden Bild. Das kann durch Editoren geschehen, was jedoch sehr aufwändig ist. Mit dem erfindungsgemäßen Verfahren besteht nun die Möglichkeit, dass diese Information automatisch generiert werden kann.

Das Verfahren gemäß diesem Aspekt stellt eine Lösung bereit, bei der automatisch ermittelt werden kann, um was für eine Kategorie es sich bei einem zu analysierenden digitalen Bild, das auf eine Rechnereinheit übertragen wird, handelt. Dies geschieht mit Hilfe von Referenzbildern, die zuvor als Elemente klassifiziert worden sind. Eine derartige Klassifizierung erfolgt vorteilhaft unter Zuhilfenahme eines Verfahrens gemäß den beiden vorangegangenen Verfahrensaspekten. Vorteilhaft können auch klassifizierte Objekte zum Einsatz kommen, bei denen es sich zum einen - klassifizierten - Zusammenschluss von zwei oder mehr klassifizierten Elementen handelt.

Vorteilhaft können die klassifizierten Elemente als klassifizierte Referenzbilder ausgebildet sind, die mit zusätzlichen Kontextinformationen zum Element verknüpft sind, wobei aus den Kontextinformationen automatisch eine Gesamtkontextinformation zu dem zu analysierenden Bildes erstellt wird.

Vorzugsweise kann die Rechnereinheit zur Erzeugung des Gesamtkontextes und/oder der Gesamtkontextinformation für das zu analysierende digitale Bild auf eine weitere Datenbank und/oder eine externe Suchmaschine zugreifen, in der einzelne klassifizierte Elemente bezüglich ihrer Sinnzusammenhänge verknüpft sind. Natürlich kann auch vorgesehen sein, dass nur eine einzige Datenbank und/oder eine interne Suchmaschine vorgesehen ist/sind.

Vorteilhaft können mittels der Rechnereinheit weitergehende Informationen zum ermittelten Gesamtkontext und/oder der Gesamtkontextinformation ermittelt und an die elektronische Endeinrichtung übertragen werden.

Vorzugsweise kann ein analysiertes digitales Bild als Referenzbild in der Datenbank abgespeichert werden. Insbesondere kann das digitale Bild unter Verwendung eines wie weiter oben beschriebenen erfindungsgemäßen Verfahrens als Element klassifiziert und entsprechend abgespeichert werden.

Besitzt die Referenzdatenbank eine hinreichend große Anzahl von klassifizierten Referenzbildern (Elementen), so ist die Wahrscheinlichkeit hoch, dass die Trefferliste zu einem gegebenen komplexeren Suchbild mehrere klassifizierte Elemente oder bereits klassifizierte Objekte enthält. Aus den Beschreibungen dieser klassifizierten Referenzbilder lässt sich eine Beschreibung und Klassifizierung des Suchbildes automatisch generieren.

Dies soll anhand eines Beispiels verdeutlicht werden. Werden in einem zu analysierenden digitalen Bild die Elemente 'Fenster' und 'Tür' erkannt, so ist die Wahrscheinlichkeit hoch, dass das zu analysierende digitale Bild ein 'Gebäude' zeigt. Diese Sinnzusammenhänge können in einer weiteren Datenbank hinterlegt sein, oder können automatisch durch eine Suchanfrage in einer externen Suchmaschine - vorzugsweise im Hintergrund - ermittelt werden (-> semantischer Ansatz). Sind die im zu analysierenden Bild erkannten Elemente genauer spezifiziert, wie beispielsweise 'klassizistisches Fenster' so handelt es sich um ein 'klassizistisches Gebäude'.

Diese automatische Klassifizierung von Elementen und Objekten kann dazu benutzt werden, die richtige Kontextinformation in der Suchantwort zurückzugeben - anstatt einer relativ unnützen Liste von gefundenen Bildern von Fenstern und Türen. So könnte im obigen Beispiel als Antwort auch ein Hinweis auf ein Buch zu dem Thema ,Klassizismus' oder der Hinweis auf weitere klassizistische Gebäude in der Umgebung zurückgeben werden.

Zuletzt kann auch das Suchbild, welches auf diese Weise automatisch klassifiziert wurde, als neues Referenzbild der Datenbank hinzugefügt werden, so dass die Referenzdatenbank immer mehr mit klassifizierten Informationen angereichert wird.

Durch immer weitere Verfeinerung der Referenzdatenbank mit klassifizierten Elementen und dahinter liegender Semantik, können auch bisher nicht bekannte Objekte erkannt werden. Ein Reifen + ein Autohersteller-Logo ergeben beispielsweise ein Auto des entsprechenden Herstellers, unabhängig davon, ob dieses Auto schon mal als Bild eingesandt wurde oder nicht.

Die vorliegende Erfindung stellt eine Lösung zur Klassifizierung von Objekten in Bildern bereit, wodurch es ermöglicht wird, Sinnzusammenhänge in digitalen Bildern durch automatische Bildverarbeitung zu erschließen. Dabei wird von einen System ausgegangen, wie es typischerweise bei bildbasierter Suche verwendet wird: Bilder werden als Suchanfrage in das System eingegeben und es wird eine Datenbank mit vielen Referenzbildern nach einem ähnlichen oder gleichen Bild durchsucht. Die Treffer werden als Liste mit den passenden Referenzbildern ausgegeben. Die vorliegende Erfindung ermöglicht es, automatisch Sinnzusammenhänge zwischen den Referenzbildern zu entdecken und somit auch eine Objektklassifizierung für das zu analysierende Bild zu leisten.

Vorteilhaft bei der vorliegenden Erfindung ist, dass das Erkennen von gleichen oder ähnlichen Bildern auf dem Vergleich von räumlich abgrenzbaren Bereichen innerhalb der Bilder erfolgt. Das heißt, dass übereinstimmende Teilbereiche / Ausschnitte in den zwei zu vergleichenden Bildern zu einem positiven Suchergebnis führen.

Vorteilhaft kann die Rechnereinheit, in der die erfindungsgemäßen Verfahren ablaufen, Bestandteil eines Kommunikationsnetzes, insbesondere eines Mobilfunknetzes, sein. Im letztgenannten Fall verfügen die Endeinrichtungen, mittels derer die zu analysierenden digitalen Bilder übertragen werden, vorzugsweise über ein Mobilfunkmodul, Bevorzugt sind die Endeinrichtungen dann als Mobiltelefone ausgebildet.

### Die vorliegende Erfindung stellt sich zusammenfassend auch wie folgt dar:

Ein zu analysierendes digitales Bild, beispielsweise eine Fotografie, wird über ein Portal auf einer Rechnereinheit (etwa einem Zielserver) einem Anwendungsbereich und einer spezialisierten Datenbank (der Referenzbilddatenbank) zugeordnet. Um diese Zuordnung durchführen zu können, wird das Bild in einer Analyseeinrichtung, etwa mittels eines geeigneten Algorithmus, analysiert. Dabei wird das Bild in Elemente und Komponenten zerlegt, die offensichtlich und typisch sind und die Chance beinhalten, das Bild eindeutig zuzuordnen (klassifizierte Elemente). Die Qualität der Zuordnung wird gesteigert durch möglichst viele klassifizierte Elemente, die durch die Analyseeinrichtung erkannt werden und einem konkreten Zusammenhang zugeordnet werden können. Eine Klassifizierung könnte dann bei der Rückspiegelung der Antworten und Vorschläge die Wahrscheinlichkeit der Relevanz beschreiben.

Die vorliegende Erfindung wird nun anhand eines Ausführungsbeispiels unter Bezugnahme auf die beiliegenden Zeichnungen näher erläutert. Es zeigen
- Figur 1: den grundsätzlichen Ablauf des Verfahrens zum Analysieren eines digitalen Bildes; und
- Figur 2: eine in diesem Zusammenhang erzeugte Trefferliste mit Referenzbildern.

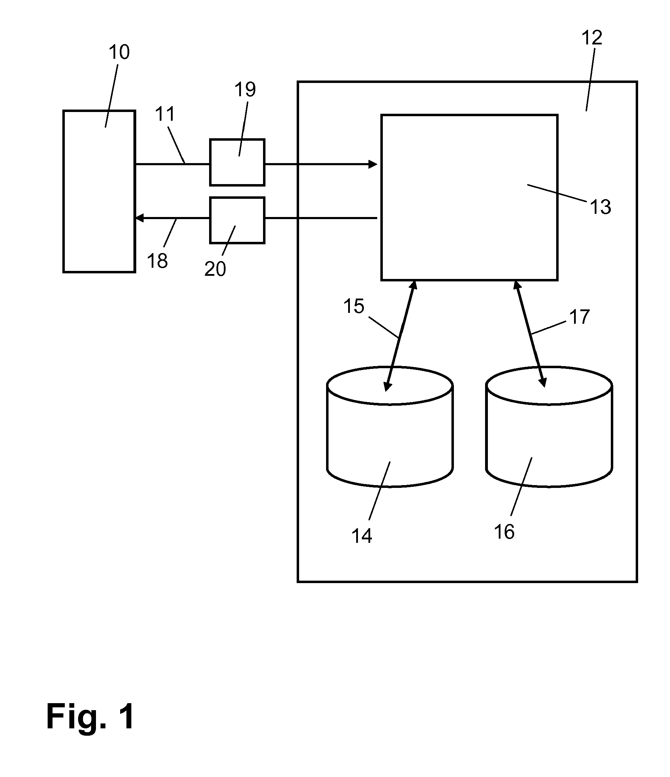

In Figur 1 ist eine elektronische Endeinrichtung 10 dargestellt, mittels derer digitale Bilder aufgenommen und übertragen werden können. Hierbei kann es sich beispielsweise um eine Digitalkamera, ein Mobiltelefon mit Kamerafunktion oder dergleichen handeln. Der Nutzer sendet über die Endeinrichtung 10 ein zu analysierendes digitales Bild 19 an eine Einrichtung zum Analysieren von Bildern. Diese kann beispielsweise Bestandteil eines Mobilfunknetzes sein und eine Rechnereinheit 12 aufweisen. Der Übertragungsweg des Bildes 19 von der Endeinrichtung 10 zur Rechnereinheit 12 ist durch den Pfeil 11 markiert.

Die Rechnereinheit 12 wirkt mit einer Analyseeinrichtung 13 zusammen, wobei die Analyseeinrichtung 13 vorzugsweise einen Bestandteil der Rechnereinheit 12 darstellt. Weiterhin ist eine Datenbank 14 vorgesehen, in welcher Referenzbilder abgespeichert sind. Die Analyseeinrichtung 13 vergleicht nun das empfangene Bild 19 mit allen Referenzbildern in der Datenbank 14, wobei die Analyseeinrichtung zumindest zeitweilig mit der Datenbank 14 zusammenwirkt, was durch einen entsprechenden Kommunikationsweg mit der Bezugsziffer 15 verdeutlicht ist. Die passenden Referenzbilder werden zu einer Trefferliste 20 zusammengefasst. Zusätzlich kann die Trefferliste noch mit ergänzenden Informationen zu dem zu analysierenden Bild 19 angereichert werden. Diese können über die Analyseeinrichtung 13 aus einer weiteren Datenbank 16 entnommen werden, wobei die Analyseeinrichtung 13 zumindest zeitweilig mit der zweiten Datenbank 16 zusammenwirkt, was durch einen Kommunikationsweg mit der Bezugsziffer 17 verdeutlicht ist. Natürlich können die Informationen auch in einer einzigen Datenbank gespeichert sein. Die Trefferliste 20 wird anschließend auf die Endeinrichtung 10 zurück übertragen, was durch den Übertragungsweg mit der Bezugsziffer 18 verdeutlicht ist.

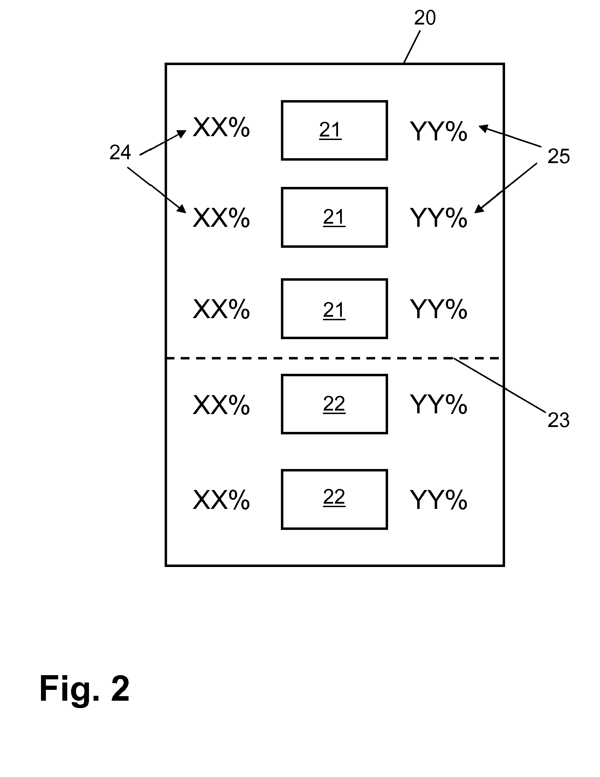

Die Trefferliste 20, die in Figur 2 in größerem Detail dargestellt ist, kann nun auf unterschiedliche Weise genutzt und bearbeitet werden.

Die Grundidee ist, dass ein Analysevorgang in der Regel mehrere Treffer liefert, da das zu analysierende Bild 19 in mehreren Referenzbildern vorkommen kann. Die bei der Analyse ermittelten Referenzbilder 21, 22 werden in der Trefferliste 20 aufgelistet. Dabei ergibt sich aus der Trefferliste 20 ein Sinnzusammenhang zwischen den Referenzbildern 21, 22 in der Liste. Bei sehr vielen Suchanfragen kann sich so über die Zeit eine sehr reichhaltige Beziehungsstruktur zwischen den Bildern aufbauen, da ein Motiv eben in vielen Trefferlisten vorkommen wird. Aus der Detailbeschreibung des einen Bildes lassen sich so Informationen über andere Bilder der Trefferliste automatisch generieren.

Jedes Referenzbild 21, 22 hat eine bestimmte Anzahl charakteristischer Merkmale anhand derer es der Suchalgorithmus erkennt. Bei diesen Merkmalen kann es sich beispielsweise um so genannte FeaturePoints handeln. Ein Referenzbild wird als Treffer ausgegeben, wenn eine bestimmte Mindestanzahl von FeaturePoints mit dem Suchbild 19 übereinstimmt.

Zunächst kann mittels der vorliegenden Erfindung erkannt werden, ob ein Bild der Referenzdatenbank 14 ein Element darstellt oder eine komplexe Szene. Der Sinn dieses Verfahrens ist es, automatisch die in der Referenzdatenbank 14 enthaltenen Elemente aufzufinden und als solche zu klassifizieren.

Wird ein beliebiges Suchbild 19 in die Rechnereinheit 12 gegeben, so ergibt sich, wie weitere oben beschrieben, als Resultat eine Liste von Matchings in Form einer Trefferliste 20. Wenn man nun eine Statistik darüber führt, wie häufig ein Referenzbild 21, 22 als Ergebnis in einer Trefferliste 20 erscheint, sowie an welcher Stelle und mit welcher Übereinstimmung so kann man auch hierdurch Elemente als solche erkennen.

Um zu bestimmen, ob ein Referenzbild ein klassifiziertes Element darstellt, werden die in der Trefferliste 20 befindlichen Referenzbilder 21, 22 in einer Analyseeinrichtung 13 der Rechnereinheit 12 hinsichtlich wenigstens eines Parameters 23, 24, 25 überprüft und gegen einen vorgegebenen Schwellenwert für den Parameter verglichen. Bei Erreichen wenigstens eines vorgegebenen Schwellenwerts wird das entsprechende Referenzbild 21, 22 als Element 22 klassifiziert und in der Datenbank 14 als klassifiziertes Element abgespeichert.

Beispielsweise können in der Analyseeinrichtung 13 der Rechnereinheit 12 alle in einer Trefferliste 20 befindlichen Referenzbilder 21, 22 hinsichtlich ihres Rankings 23 innerhalb der Trefferliste 20 überprüft und gegen einen vorgegebenen Schwellenwert verglichen werden. Tritt ein Referenzbild meist nicht unter den ersten Treffern, und somit im unteren Teil der Trefferliste 20 auf, so deutet dies auf ein Referenzbild in Form eines Elements 22 hin, da in der Regel Szenen als Suchbilder eingegeben werden und somit Referenzbilder in Form von Szenen im oberen Teil der Trefferliste 20 angesiedelt sind. Alternativ oder zusätzlich können in der Analyseeinrichtung 13 der Rechnereinheit 12 alle in einer Trefferliste 20 befindlichen Referenzbilder 21, 22 hinsichtlich des Grades ihrer prozentualen Übereinstimmung 24 mit dem zu analysierenden digitalen Bild überprüft und gegen einen vorgegebenen Schwellenwert verglichen werden. Auch ist denkbar, dass in der Analyseeinrichtung 13 der Rechnereinheit 12 alle in einer Trefferliste 20 befindlichen Referenzbilder 21, 22 hinsichtlich des prozentualen Grades ihrer größenordnungsmäßigen Repräsentanz 25 innerhalb des zu analysierenden digitalen Bildes, bezogen auf die Gesamtfläche des zu analysierenden digitalen Bildes, überprüft und gegen einen vorgegebenen Schwellenwert verglichen werden.

Vorteilhaft werden dabei in der Analyseeinrichtung 13 der Rechnereinheit 12 die in einer Vielzahl von unterschiedlichen Trefferlisten 20 befindlichen Referenzbilder 21, 22, die im Zusammenhang mit einer Vielzahl von unterschiedlichen zu analysierenden digitalen Bildern erzeugt worden sind, hinsichtlich ihrer absolut auftretenden Häufigkeit innerhalb dieser Trefferlisten 20 überprüft und gegen einen vorgegebenen Schwellenwert verglichen. Die Kombination dieser Möglichkeiten kann zum Erkennen von Elementen genutzt werden. Bei Überschreiten beziehungsweise Unterschreiten einer gesetzten Schwelle wird das entsprechende Referenzbild als Element 22 klassifiziert. Durch Kombination der beschriebenen Schritte und insbesondere durch Prüfung neuer Referenzbilder auf die Elementeigenschaft hin, wird die Referenzbilddatenbank 14 automatisch immer mehr klassifizierte Elemente 22 beinhalten. Dies kann weiter dazu benützt werden, auch komplexere Bilder 19 zu klassifizieren.

Weiterhin kann durch die vorliegende Erfindung erkannt werden, ob ein zu analysierendes Bild 19 ein Element darstellt, oder eine komplexe Szene. Das gegebene Bild 19 wird zunächst gegen alle vorhandenen Referenzbilder mittels Bildvergleich geprüft. Dabei ist davon auszugehen, dass ein Teil dieser Referenzbilder bereits als Elemente klassifiziert wurden.

Findet kein Matching statt, so wird das Bild 19 nicht automatisch klassifiziert und eventuell einer Editoreinrichtung (nicht dargestellt) zur Sichtprüfung und gegebenenfalls manuellen Klassifizierung gegeben. Findet ein Matching statt so wird in der Analyseeinrichtung 13 folgender Algorithmus durchlaufen: Die Ergebnisliste 20 wird nach Bildern, welche bereits als Element 22 klassifiziert worden sind, durchsucht. Gibt es in der Ergebnisliste 20 bereits Elemente 22, so wird dies zur weiteren Auswertung vermerkt. Die Elemente 22 werden aus dem zu analysierenden Bild 19 subtrahiert, beispielsweise indem diejenigen FeaturePoints des zu untersuchenden Bildes 19, welche mit den gefundenen Elementen 22 übereinstimmen, vom Bild 19 subtrahiert werden. Die verbleibenden Bestandteile des Bildes 19 werden noch einmal zum Matching in die Analyseeinrichtung 13 geschickt.

Besitzt die Referenzdatenbank 14 eine hinreichend große Anzahl von klassifizierten Referenzbildern, so ist die Wahrscheinlichkeit hoch, dass die Trefferliste 20 zu einem gegebenen komplexeren Suchbild 19 mehrere klassifizierte Elemente 22 oder bereits klassifizierte Objekte enthält. Aus den Beschreibungen dieser klassifizierten Referenzbilder lässt sich eine Beschreibung und Klassifizierung des Suchbildes 19 automatisch generieren.

Werden im zu analysierenden Bild 19 beispielsweise die Elemente 22 'Fenster' und ,Tür' erkannt, so ist die Wahrscheinlichkeit hoch, dass das Suchbild 19 ein 'Gebäude' zeigt. Diese Sinnzusammenhänge sind ein einer weiteren Datenbank 16 hinterlegt, oder werden automatisch durch eine Suchanfrage bei einer externen Suchmaschine ermittelt. Diese automatische Klassifizierung kann dazu benutzt werden, die richtige Kontextinformation in der Suchantwort zurückzugeben - anstatt eine relativ unnützen Liste von gefundenen Bildern von Fenstern und Türen. So könnte man in obigem Beispiel in der Trefferliste 20 als Antwort zusätzliche Hinweise zum Gebäude hinzufügen.

Zuletzt kann auch das Suchbild 19, welches auf diese Weise automatisch klassifiziert wurde, als neues Referenzbild der Datenbank 14 hinzugefügt werden, so dass die Referenzdatenbank 14 immer mehr mit klassifizierten Informationen angereichert wird. Durch immer weitere Verfeinerung der Referenzdatenbank 14 mit klassifizierten Elementen und dahinter liegender Semantik, können auch bisher nicht bekannte Objekte erkannt werden.

### Bezugszeichenliste

- 10: Elektronische Endeinrichtung
- 11: Übertragungsweg eines zu analysierenden Bildes
- 12: Rechnereinheit
- 13: Analyseeinrichtung
- 14: Datenbank mit Referenzbildern
- 15: Kommunikationsweg Analyseeinrichtung-Datenbank
- 16: Datenbank mit Informationen zu Referenzbildern
- 17: Kommunikationsweg Analyseeinrichtung-Datenbank
- 18: Übertragungsweg einer erzeugten Trefferliste sowie von Kontextinformationen
- 19: Zu analysierendes digitales Bild

- 20: Trefferliste
- 21: Referenzbilder (Szene)
- 22: Referenzbilder (Element)
- 23: Parameter (Ranking)
- 24: Parameter (Übereinstimmungsgrad)
- 25: Parameter (Repräsentationsgrad)

## Patentansprüche

1. Verfahren zum Bearbeiten einer Datenbank (14), in der Referenzbilder für ein Analyseverfahren zum automatischen Analysieren von digitalen Bildern abgespeichert sind, wobei während des automatischen Analyseverfahrens ein in einer Rechnereinheit (12) empfangenes digitales Bild derart analysiert wird, dass eine Trefferliste (20) mit zu dem digitalen Bild in Bezug stehenden Referenzbildern (21, 22) erzeugt wird, **dadurch gekennzeichnet, dass** die in wenigstens einer Trefferliste (20) befindlichen Referenzbilder (21, 22) in einer Analyseeinrichtung (13) der Rechnereinheit (12) hinsichtlich wenigstens eines Parameters (23, 24, 25) überprüft und gegen einen vorgegebenen Schwellenwert für den Parameter verglichen werden und dass bei Erreichen wenigstens eines vorgegebenen Schwellenwerts das entsprechende Referenzbild (21,22) als Element klassifiziert und in der Datenbank (14) als klassifiziertes Element abgespeichert wird.

2. Verfahren nach Anspruch 1, **dadurch gekennzeichnet, dass** in der Analyseeinrichtung (13) der Rechnereinheit (12) alle in einer Trefferliste (20) befindlichen Referenzbilder (21, 22) hinsichtlich ihres Rankings (23) innerhalb der Trefferliste (20) überprüft und gegen einen vorgegebenen Schwellenwert verglichen werden und/oder dass in der Analyseeinrichtung (13) der Rechnereinheit (12) alle in einer Trefferliste (20) befindlichen Referenzbilder (21, 22) hinsichtlich des Grades ihrer Übereinstimmung (24) mit dem zu analysierenden digitalen Bild überprüft und gegen einen vorgegebenen Schwellenwert verglichen werden und/oder dass in der Analyseeinrichtung (13) der Rechnereinheit (12) alle in einer Trefferliste (20) befindlichen Referenzbilder (21, 22) hinsichtlich des Grades ihrer größenordnungsmäßigen Repräsentanz (25) innerhalb des zu analysierenden digitalen Bildes, bezogen auf die Gesamtfläche des zu analysierenden digitalen Bildes, überprüft und gegen einen vorgegebenen Schwellenwert verglichen werden und/oder dass in der Analyseeinrichtung (13) der Rechnereinheit (12) die in einer Vielzahl von unterschiedlichen Trefferlisten (20) befindlichen Referenzbilder (21, 22), die im Zusammenhang mit einer Vielzahl von unterschiedlichen zu analysierenden digitalen Bildern erzeugt worden sind, hinsichtlich ihrer absolut auftretenden Häufigkeit innerhalb dieser Trefferlisten (20) überprüft und gegen einen vorgegebenen Schwellenwert verglichen werden.

3. Verfahren nach Anspruch 1 oder 2, **dadurch gekennzeichnet, dass** bei Erreichen wenigstens eines vorgegebenen Schwellenwerts das entsprechende Referenzbild in einer Weise als Elemente klassifiziert wird, dass das entsprechende Referenzbild an eine Editoreinrichtung übertragen wird, innerhalb derer die Klassifizierung des Referenzbildes als Element erfolgt.

4. Verfahren nach einem der Ansprüche 1 bis 3, **dadurch gekennzeichnet, dass** ein in der Rechnereinheit (12) als Element klassifiziertes Referenzbild einer Editoreinrichtung zugeführt wird, in der das Element mit wenigstens einer weiteren, das Element charakterisierenden Zusatzinformation, verknüpft wird.

5. Verfahren zum Analysieren eines digitalen Bildes (19), wobei das zu analysierende digitale Bild in einer einer Rechnereinheit (12) zugeordneten Analyseeinrichtung (13) automatisch analysiert wird, wobei das digitale Bild gegen Referenzbilder, die in einer der Rechnereinheit (13) zugeordneten Datenbank (14) abgespeichert sind, verglichen wird und wobei solche Referenzbilder (21, 22), die in einem Bezug zu dem zu analysierenden digitalen Bild stehen, von der Analyseeinrichtung (13) in einer Trefferliste (20) zusammengefasst werden, **dadurch gekennzeichnet, dass** mittels des Verfahrens analysiert wird, ob es sich bei dem zu analysierenden digitalen Bild um ein Element oder eine Szene handelt, derart, dass alle in der Trefferliste (20) zusammengefassten Referenzbilder (21, 22) in der Analyseeinrichtung (13) dahingehend geprüft werden, ob es sich um klassifizierte Elemente (22) handelt, dass in der Trefferliste (20) befindliche klassifizierte Elemente (22) automatisch **gekennzeichnet** werden, dass in der Trefferliste (20) **gekennzeichnete** klassifizierte Elemente (22) mittels der Analyseeinrichtung (13) aus dem zu analysierenden digitalen Bild subtrahiert werden, dass das verbleibende digitale Restbild einem weiteren Vergleichsschritt unterzogen wird und dass eine bei dem weiteren Vergleichschritt erzeugte zweite Trefferliste in der Analyseeinrichtung (13) bezüglich ihrer Inhalte analysiert wird.

6. Verfahren nach Anspruch 5, **dadurch gekennzeichnet, dass** mittels des Verfahrens das zu analysierende digitale Bild auf der Basis der Inhalte von wenigstens einer Trefferliste (20), vorzugsweise der erzeugten zweiten Trefferliste, in der Analyseeinrichtung als Element oder Szene klassifiziert wird.

7. Verfahren nach Anspruch 5 oder 6, **dadurch gekennzeichnet, dass** in dem Fall, dass die bei dem weiteren Vergleichsschritt erzeugte zweite Trefferliste keine Inhalte aufweist, das zu analysierende digitale Bild in der Rechnereinrichtung (12) als Element klassifiziert und als klassifiziertes Element in der Datenbank (14) abgespeichert wird.

8. Verfahren nach einem der Ansprüche 5 bis 7, **dadurch gekennzeichnet, dass** in dem Fall, dass die bei dem weiteren Vergleichsschritt erzeugte zweite Trefferliste wenigstens einen Treffer aufweist, das verbleibende Restbild einer Editoreinrichtung zugeführt wird, um in dem Restbild wenigstens ein weiteres Element zu klassifizieren.

9. Verfahren zum Analysieren eines digitalen Bildes (19), wobei das zu analysierende digitale Bild von einer elektronischen Endeinrichtung (10) auf eine Rechnereinheit (12) übertragen und in einer der Rechnereinheit (12) zugeordneten Analyseeinrichtung (13) automatisch analysiert wird, indem das digitale Bild gegen Referenzbilder, die in einer der Rechnereinheit (12) zugeordneten Datenbank (14) abgespeichert sind, verglichen wird, wobei solche Referenzbilder (21, 22), die in einem Bezug zu dem zu analysierenden digitalen Bild stehen, von der Analyseeinrichtung (13) in einer Trefferliste (20) zusammengefasst werden, und wobei zum analysierten digitalen Bild erzeugte Kontextinformationen von der Rechnereinheit (12) zur elektronischen Endeinrichtung übertragen werden, **dadurch gekennzeichnet, dass** die Trefferliste (20) in der Analyseeinrichtung (13) automatisch auf klassifizierte Elemente (22) hin überprüft wird, dass aus den ermittelten klassifizierten Elementen (22) automatisch ein Gesamtkontext zu dem zu analysierenden Bild erstellt wird und dass der Gesamtkontext an die elektronische Endeinrichtung (10) übertragen wird.

10. Verfahren nach Anspruch 9, **dadurch gekennzeichnet, dass** die klassifizierten Elemente als klassifizierte Referenzbilder ausgebildet sind, die mit zusätzlichen Kontextinformationen zum Element verknüpft sind und dass aus den Kontextinformationen automatisch eine Gesamtkontextinformation zu dem zu analysierenden Bildes erstellt wird.

11. Verfahren nach Anspruch 9 oder 10, **dadurch gekennzeichnet, dass** die Rechnereinheit (12) zur Erzeugung des Gesamtkontextes und/oder der Gesamtkontextinformation für das zu analysierende digitale Bild auf eine weitere Datenbank (16) und/oder eine externe Suchmaschine zugreift, in der einzelne klassifizierte Elemente bezüglich ihrer Sinnzusammenhänge verknüpft sind.

12. Verfahren nach einem der Ansprüche 9 bis 11, **dadurch gekennzeichnet, dass** mittels der Rechnereinheit (12) weitergehende Informationen zum ermittelten Gesamtkontext und/oder der Gesamtkontextinformation ermittelt und an die elektronische Endeinrichtung (10) übertragen werden.

13. Verfahren nach einem der Ansprüche 9 bis 12, **dadurch gekennzeichnet, dass** ein analysiertes digitales Bild als Referenzbild in der Datenbank (14) abgespeichert wird.

14. Einrichtung zum Analysieren eines digitalen Bildes (19), insbesondere zur Durchführung des Verfahrens nach einem der Ansprüche 1 bis 4, mit einer Rechnereinheit (12), aufweisend eine Kommunikationsschnittstelle zu wenigstens einer elektronischen Endeinrichtung (10), einer der Rechnereinheit (12) zugeordneten Datenbank (14), in der Referenzbilder abgespeichert sind, einer der Rechnereinheit (12) zugeordneten Analyseeinrichtung (13) zum Analysieren digitaler Bilder, aufweisend eine Einrichtung zum Erstellen einer Trefferliste (20) mit Referenzbildern (21, 22), die in Bezug zu dem zu analysierenden digitalen Bild stehen, eine Einrichtung zum Vergleichen der in wenigstens einer Trefferliste (20) befindlichen Referenzbilder (21, 22) hinsichtlich wenigstens eines Parameters (23, 24, 25) gegen wenigstens einen vorgegebenen Schwellenwert und eine Vorrichtung zum Klassifizieren des Referenzbildes bei Erreichen wenigstens eines Schwellenwerts als klassifiziertes Element.

15. Einrichtung zum Analysieren eines digitalen Bildes (19), insbesondere zur Durchführung des Verfahrens nach einem der Ansprüche 5 bis 8, mit einer Rechnereinheit (12), aufweisend eine Kommunikationsschnittstelle zu wenigstens einer elektronischen Endeinrichtung (10), einer der Rechnereinheit (12) zugeordneten Datenbank (14), in der Referenzbilder abgespeichert sind, einer der Rechnereinheit (12) zugeordneten Analyseeinrichtung (13) zum Analysieren digitaler Bilder, aufweisend eine Einrichtung zum Erstellen einer Trefferliste (20) mit Referenzbildern (21, 22), die in Bezug zu dem zu analysierenden digitalen Bild stehen, eine Einrichtung mit Mitteln zum Überprüfen der Referenzbilder (21, 22) innerhalb der Trefferliste (20), ob es sich um klassifizierte Elemente (22) handelt und Mitteln zum Kennzeichnen der in der Trefferliste (20) identifizierten Elemente (22), eine Subtraktionseinrichtung zum Subtrahieren von in der Trefferliste (20) **gekennzeichneten** Elementen (22) aus dem zu analysierenden digitalen Bild und eine Einrichtung zum Erstellen einer zweiten Trefferliste mit Referenzbildern auf der Basis des nach der Subtraktion verbliebenen digitalen Restbildes und zum Analysieren der zweiten Trefiferliste hinsichtlich ihrer Inhalte.
